(19) Europäisches Patentamt / European Patent Office / Office européen des brevets

(11) **EP 2 325 514 A1**

(12) **DEMANDE DE BREVET EUROPEEN**

(43) Date de publication:
25.05.2011 Bulletin 2011/21

(51) Int Cl.:
*F16D 48/08* (2006.01)

(21) Numéro de dépôt: **10306124.8**

(22) Date de dépôt: **15.10.2010**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **24.11.2009 FR 0905634**

(71) Demandeur: **Renault S.A.S.**
**92100 Boulogne-Billancourt (FR)**

(72) Inventeurs:
• **Borsotto, Bastien**
**83300, DRAGUIGNAN (FR)**
• **Zaoui, Kamal**
**78120, RAMBOUILLET (FR)**

(54) **Procédé de pilotage en mode rampage d'un embrayage de véhicule automobile**

(57) L'invention concerne un procédé de pilotage en mode rampage d'un embrayage (20) d'un véhicule automobile (1) à boîte de vitesses automatique, comportant les étapes consistant à:
- mesurer les vitesses angulaires ($\omega_1$, $\omega_2$) des arbres d'entrée et de sortie de l'embrayage,
- calculer une vitesse angulaire cible pour l'arbre de sortie de l'embrayage,
- calculer un premier couple en fonction du rapport de vitesses angulaires entre la sortie et l'entrée de l'embrayage,
- calculer un second couple en fonction de l'écart entre la vitesse angulaire cible et la vitesse angulaire en sortie de l'embrayage,
- sélectionner l'un des deux couples en fonction de la valeur du second couple, et
- déduire du couple sélectionné une consigne de pilotage de l'embrayage.

Fig.1

**Description**

DOMAINE TECHNIQUE AUQUEL SE RAPPORTE L'INVENTION

La présente invention concerne de manière générale le pilotage en mode rampage des véhicules automobiles équipés de boîtes de vitesses automatiques robotisées' ou à double embrayages.

Elle concerne plus particulièrement un procédé de pilotage en mode rampage d'un embrayage d'un véhicule automobile à boite de vitesses automatique, comportant les étapes consistant à :

    a) acquérir des paramètres de fonctionnement du véhicule automobile,
    b) calculer un couple en fonction d'une partie au moins desdits paramètres de fonctionnement acquis.
    c) déduire une consigne de pilotage de l'embrayage en fonction dudit couple calculé
    d) piloter l'embrayage suivant ladite consigne de pilotage.

Elle concerne également un véhicule automobile comportant un moteur, un embrayage, une boîte de vitesses automatique et un calculateur apte à piloter ledit embrayage pour faire varier le couple transmis depuis le moteur verts la boîte de vitesses suivant ladite consigne de pilotage.

ARRIERE-PLAN TECHNOLOGIQUE

Dans un véhicule automobile du type précité, le calculateur est généralement programmé pour piloter le moteur, l'embrayage et la boîte de vitesses de telle: sorte que le confort de conduite du véhicule soit optimal.

Le calculateur est en particulier programmé pour piloter ces différents organes suivant des modes de pilotage adaptés à l'environnement dans lequel évolue le véhicule.

Parmi les différents modes de pilotage de ces organes, on distingue un mode particulier dit de « rampage », destiné à faciliter la conduite du véhicule lorsque ce dernier avance à vitesse très réduite. Ce mode de rampage est plus précisément sélectionné lorsque la pédale d'accélération est relâchée et que la vitesse du véhicule est réduite.

Dans ce mode, le calculateur commande l'embrayage de telle manière que celui-ci transmet un couple réduit aux roues motrices du véhicule automobile, ce qui permet au véhicule d'avancer à une allure limitée. De cette manière, le conducteur ne commande la vitesse du véhicule qu'en agissant sur la pédale de frein.

Ce mode offre donc un confort de conduite appréciable au conducteur, en particulier lorsqu'il se trouve dans les embouteillages ou lorsqu"il doit effectuer un créneau.

Ce mode de rampage permet également, lorsque le véhicule est à l'arrêt dans une côte de pente limitée, de démarrer sans que le véhicule automobile e recule puisque le couple transmis par l'embrayage aux roues motrices permet de contrer l'effet de la gravité sur le véhicule automobile.

On connaît actuellement un procédé de pilotage dans lequel, en mode rampage, l'embrayage est piloté pour transmettre aux roues motrices du véhicule un couple calculé en fonction du rapport de vitesses angulaires entre la sortie et l'entrée de l'embrayage.

Avec un tel calcul, lorsque la vitesse du véhicule est sensiblement nulle, l'embrayage est piloté pour faire passer un couple important aux roues motrices du véhicule afin que celui-ci accélère rapidement. Puis, lorsque la vitesse du véhicule augmente, l'embrayage est piloté pour faire passer un couple qui diminue jusqu'à s'annuler presque complètement lorsque le véhicule atteint une vitesse maximum de rampage, généralement de l'ordre de 5 km/h. De cette manière, une fois le rampage établi, la vitesse du véhicule se stabilise à cette vitesse maximum de rampage.

L'inconvénient d'un tel procédé de pilotage de l'embrayage est qu'il ne permet pas de tenir compte des perturbations extérieures subies par le véhicule. En particulier,ce procédé ne permet pas de tenir compte de la pente de la côte sur laquelle se trouve le véhicule.

Par conséquent, en descente, le véhicule automobile accélère de manière incontrôlée et peu confortable pour le conducteur. Au contraire, en montée, plus la pente est importante, moins la vitesse maximum de rampage est importante, ce qui s'avère également inconfortable pour le conducteur.

OBJET DE L'INVENION

Afin de remédier aux inconvénients précités de l'état de la technique, la présente invention propose un procédé de pilotage de l'embrayage qui permet de moduler le couple transmis par l'embrayage pour l'adapter aux perturbations subies par le véhicule.

Plus particulièrement, on propose selon l'invention un procédé de pilotage tel que défini dans l'introduction, dans lequel :

- à l'étape a), on mesure une première vitesse angulaire sur un premier arbre lié en rotation à un arbre d'entrée dudit embrayage et une seconde vitesse angulaire sur un second arbre lié en rotation à un arbre de sortie dudit embrayage, et on calcule une vitesse angulaire cible pour ledit second arbre en fonction d'une partie au moins desdits paramètres de fonctionnement acquis,
- à l'étape b), on calcule un premier couple en fonction d'un rapport entre la vitesse angulaire (seconde ou cible) du second arbre et la vitesse angulaire du premier arbre, et on calcule un second couple en fonction d'un écart entre la vitesse angulaire cible et la seconde vitesse angulaire, et
- à l'étape c), on sélectionne l'un des premier et second couples en fonction soit d'un paramètre de fonctionnement acquis a l'étape a) (tel que la pente gravie par le véhicule), soit de la valeur de l'un des couples calculés à l'étape b), et on déduit ladite consigne de pilotage en fonction seulement dudit premier ou second couple sélectionné.

Salon l'invention, le premier couple est calculé comme dans l'art antérieur présenté ci-devant, en fonction du rapport de vitesses angulaires entre la sortie et l'entrée de l'embrayage, sans tenir compte des perturbations extérieures subies par le véhicule.

Le second couple est quant à lui calculé pour tenir compte de ces perturbations extérieures, grâce à la vitesse angulaire mesurée sur le second arbre qui est proportionnelle à la vitesse du véhicule.

Plus précisément, grâce à cette vitesse angulaire mesurée, le calculateur est adapté à déceler une variation de vitesses non désirée du véhicule. Le second couple est alors calculé en boucle fermée, de manière à s'opposer à cette variation de vitesses afin que la vitesse du véhicule reste précisément égale à la vitesse désirée. Ainsi, ce second couple permet de contrer l'ensemble des perturbations subies par le véhicule, en particulier les variations de pente, les variations des frottements des organes mécaniques du véhicule, les variations d'efforts aérodynamiques, etc.

L'inconvénient du pilotage de l'embrayage suivant ce second couple est que lorsque le véhicule se trouve sur une montée de pente importante, le couple passé par l'embrayage pour faire avancer le véhicule est très important, si bien que les disques d'embrayage qui glissent les uns contre les autres se détériorent prématurément. La durée de vie d'un embrayage constamment piloté suivant ce second couple est donc réduite.

Par ailleurs, face à une telle pente, le conducteur ne s'attend pas à ce que son véhicule gravisse la montée en mode rampage sans qu'il n'ait besoin d'appuyer sur l'accélérateur. L'avance du véhicule réduit alors l'agrément de conduite de ce véhicule et peut même être facteur d'accident.

En sélectionnant l'un ou l'autre de ces premier et second couples le calculateur peut ainsi profiter des avantages offerts par le second couple tant que la pente de la montée à gravir n'est pas trop importante, puis basculer sur un mode de pilotage de l'embrayage suivant le premier couple lorsque cette pente devient trop importante.

D'autres caractéristiques avantageuses et non limitatives du procédé de pilotage conforme à l'invention sont les suivantes :

- à l'étape c), le premier ou second couple est sélectionné en fonction au moins de la valeur du second couple ;
- à l'étape c), le premier ou second couple est sélectionné en fonction de la différence entre le premier couple et le second couple ;
- à l'étape c), le premier ou second couple sélectionné est le plus faible des premier et second couples ;
- ladite vitesse angulaire cible est calculée en fonction d'un modèle d'accélération du véhicule automobile en mode rampage prédéterminé;
- le modèle d'accélération présente un échelon d'accélération d'amplitude et de durée prédéterminées, et ladite vitesse angulaire cible est calculée en fonction du produit de ladite amplitude par ladite durée ;
- à l'étape b), le second couple est calculé pour être égal à la somme d'un couple cible calculé en fonction d'une partie au moins desdits paramètres de fonctionnement acquis à l'étape a), et d'un couple d'ajustement calculé en fonction dudit écart ;
- ledit couple d'ajustement est calculé en fonction dudit écart au moyen d'un régulateur PID ;
- à l'étape b), ledit couple cible est calculé en fonction d'un modèle d'accélération prédéterminé du véhicule automobile en mode rampage ;
- ledit couple cible est calculé en fonction de ladite amplitude.

L'invention concerne également un véhicule automobile tel que défini dans l'introduction, dans lequel le calculateur est programmé pour mettre en oeuvre un procédé de pilotage tel que précité.

DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :

- la figure 1 est une vue schématique d'un véhicule automobile comportant un embrayage et un calculateur adapté à piloter cet embrayage suivant un procédé de pilotage selon l'invention;
- la figure 2 est un schéma bloc illustrant le fonctionnement du procédé de pilotage de l'embrayage de la figure 1 :
- la figure 3 est un graphique illustrant l'évolution du premier couple en fonction du rapport de vitesses angulaires entre la sortie et l'entrée de l'embrayage de la figure 1 ;
- la figure 4A est un graphique lustrant l'évolution de la vitesse de l'arbre de sortie de l'embrayage de la figure 1 en fonction du temps écoulé, lorsque celui-ci est piloté selon le premier couple:
- la figure 4B est un graphique illustrant l'évolution de la vitesse du véhicule de la figure 1 en fonction du temps écoulé, lorsque l'embrayage est piloté selon le premier couple:
- la figure 4C est un graphique illustrant l'évolution du premier couple en fonction du temps écoulé, lors de l'entrée du véhicule en mode rampage,
- la figure 5A est un graphique illustrant, en trait continu, l'évolution de la vitesse angulaire de l'arbre de sortie de l'embrayage de la figure 1, et, en pointillés, l'évolution de la vitesse angulaire cible, lorsque l'embrayage est piloté selon le second couple;
- la figure 5B est un graphique illustrant, en trait continu, l'évolution du second couple, en pointillés, l'évolution du couple cible, et, en traits discontinus, l'évolution du couple d'ajustement, lorsque l'embrayage est piloté selon le second couple;
- la figure 6A est un graphique illustrant l'évolution de l'accélération du véhicula de la figure 1 en fonction du temps écoulé, lors de l'entrée du véhicule en mode rampage lorsque l'embrayage est piloté selon le second couple ;
- la figure 6B est un graphique illustrant l'évolution de la vitesse angulaire cible en fonction du temps écoulé, lors de l'entrée du véhicule en mode rampage lorsque l'embrayage est piloté selon le second couple;
- la figure 6C est un graphique illustrant l'évolution du couple cible en fonction du temps écoulé, lors de l'entrée du véhicule en mode rampage lorsque l'embrayage est piloté selon le second couple;
- la figure 7A est un graphique illustrant, en trait continu, l'évolution de la vitesse angulaire de l'arbre de sortie de l'embrayage de la figure 1, et, en pointillés, l'évolution de la vitesse angulaire cible en fonction du temps écoulé;
- la figure 7B est un graphique illustrant, en trait continu, l'évolution du couple de consigne, en pointillés, l'évolution du premier couple, et, en traits discontinus, l'évolution du second couple, en fonction du temps écoulé;
- la figure 7C est un graphique illustrant l'évolution de la pente de la montée que le véhicule gravit

Dispositif

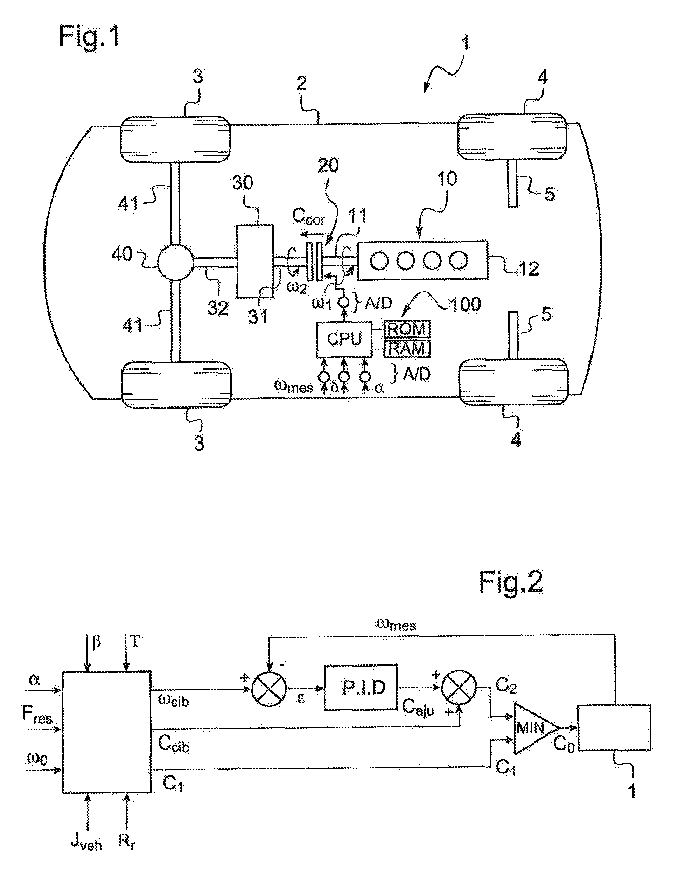

Sur la figure 1, on a représenté schématiquement un véhicule automobile 1 comportant un châssis 2, deux roues avant 3 motrices et deux roues arrière 4 non motrices.

Les deux roues avant 3 et les deux roues arrière 4 sont respectivement solidaires en rotation de deux arbres de transmission latéraux avant 41 et de deux arbres de transmission latéraux arrière 5.

Le châssis 2 supporte, d'une part, un moteur à combustion interne 10 qui comprend un bloc-moteur 12 duquel fait saillie une extremité d'un vilebrequin 11, et, d'autre part, des moyens de transmission du couple provenant du vilebrequin 11 vers les deux arbres de transmission latéraux avant 41.

Ces moyens de transmission de couple comportent un embrayage 20 dont l'arbre d'entrée est solidaire en rotation du vilebrequin 11, une boîte de vitesses 30 automatique robotisée dont l'arbre d'entrée 31 est solidaire en rotation de l'arbre de sortie de l'embrayage 20, et un différentiel 40 dont l'arbre d'entrée est solidaire en rotation de l'arbre de sortie 32 de la boîte de vitesses 30 et dont les arbres de sortie sont solidaires en rotation des deux arbres de transmission latéraux avant 41.

L'embrayage 20 est un dispositif d'accouplement temporaire entre le vilebrequin 11 et l'arbre d'entrée 3.1 de la boîte de vitesses 30. Il comporte au moins deux disques adaptés à venir au contact l'un de l'autre pour transmettre progressivement le couple provenant du vilebrequin 11 vers l'arbre d'entrée 31 de la boîte de vitesses 30.

Un tel embrayage 20 peut présenter trois états, dont un état embrayé, un état débrayé et un état de glissement.

Lorsque l'embrayage 20 est embrayé, il transmet intégralement le couple fourni par le moteur 10 aux roues avant 3 du véhicule automobile 1.

Lorsque l'embrayage 20 est débrayé, la transmission de couple est interrompue si bien que le véhicule est en roue libre. Gans cet état, le véhicule 1 peut s'arrêter sans provoquer le calage du moteur.

Lorsque l'embrayage 20 est en phase de glissement, les disques de l'embrayage glissent l'un contre l'autre. Dans cette phase, il est possible de moduler précisément le couple transmis à l'arbre d'entrée 31 de la boîte de vitesses 30 en pilotant l'effort de mise en pression des deux disques l'un contre l'autre.

Pour piloter les différents organes du véhicule automobile 1 et notamment l'embrayage 20, il est prévu un calculateur 100 comportant un processeur (CPU), une mémoire vive (RAM), une mémoire Morts (ROM), des convertisseurs analogiques-numériques (A/D), et différentes interfaces d'entrée et de sortie,

Grâce à ses interfaces d'entrée, le calculateur 100 est adapté à recevoir des signaux d'entrée provenant de différents capteurs. Ces signaux d'entrés permettent de déterminer des paramètres relatifs au fonctionnement du véhicule, tels que par exempt la vitesse du véhicule $V_{veh}$,

Dans sa mémoire morte, le calculateur comporte diverses données telles que le rayon $R_1$ des roues avant 3 du véhicule 1, la masse M du véhicule 1, et un modèle d'accélération β, T qui sera décrit plus en détail dans la suite de cet exposé.

Grâce aux paramètres mesurés par les capteurs et aux données mémorisées dans sa mémoire morte, le calculateur 100 est adapté à générer, pour chaque condition de fonctionnement du véhicule, des signaux de sortie.

Enfin, grâce à ses interfaces de sortie, le contrôleur. 100 est adapté à transmettre ces signaux de sortie aux différents organes du véhicule pour les piloter.

Procédé

Le calculateur 100 est notamment adapté à piloter l'embrayage 20 dans l'un des trois états précités, en fonction du mode de fonctionnement sélectionné par le conducteur sur la boîte de Vitesses 30 du véhicule.

Parmi ces modes, on distingue un mode dit de « contrôle continu» dans lequel l'embrayage 20 est piloté on position embrayée, pour transmettre l'ensemble du couple provenant du vilebrequin 11 aux roues avant 3 du véhicule.

On distingue aussi un mode dit « neutre » correspondant au cas où le levier de commande, de la transmission du véhicule est en position « Neutre » nu « Parking », dans lequel l'embrayage 20 est piloté en position débrayée.

On distingue également, et c'est l'objet de la présente invention, un mode de rampage qui est sélectionné lorsque la vitesse $V_{veh}$ du véhicule est inférieure à une vitesse maximum de rampage $V_{max}$ (ici égale à 6 km/h) et lorsque le conducteur n'appuie pas sur la pédale d'accélérateur.

Ce mode de rampage permet au conducteur, lorsque le véhicule se déplace à une vitesse réduite, d'accélérer ou de freiner à l'aide de la seule pédale de frein, ce qui facilite le pilotage du véhicule dans les embouteillages,en côte ou pour réaliser un créneau.

Dans ce mode de rampage, la pression de contact entre les disques de l'embrayage 20 est pilotée pour précisément moduler le couple transmis à l'arbre d'entrée 31 de la boîte de vitesse 30.

Pour cela, l'embrayage 20 est piloté suivant un procédé de pilotage en mode rampage qui se décompose en quatre étapes successives, dont :

- une étape a) d'acquisition de paramètres de fonctionnement du véhicule automobile 1,
- une étape b) de calcul de couples transmissibles par l'embrayage 20 en fonction d'une partie au moins desdits paramètres de fonctionnement acquis à l'étape a),
- une étape c) de déduction d'une consigne de pilotage de l'ernbrayage en fonction des couples calculés, et
- une étape d) de pilotage de l'embrayage 20 suivant cette consigne de pilotage.

Comme le montre plus précisément la figure 2, selon une caractéristique particulièrement avantageuse de invention,

- à l'étape à), on mesure la vitesse angulaire $\omega_1$ du vilebrequin 11 et la vitesse angulaire $\omega_2$ de l'arbre d'entrée 31 de la boîte de vitesses 30, et on calcule une vitesse angulaire cible $\omega_{cib}$ pour cet arbre d'entrée 31 en fonction d'une partie au moins des paramètres de fonctionnement acquis à l'étape a).,
- à l'étape b), on calculé un premier couple $C_1$ en fonction d'un rapport $p = \omega_2/\omega_1$ et un second couple $C_2$ en fonction d'un écart $= \omega_{cib} - \omega_2$, et
- à l'étape c), on sélectionne l'un des premier et second couples $C_1$, $C_2$ en fonction par exemple de ta valeur du second couple $C_2$, et on déduit la consigne de pilotage de t'embrayage 20 en fonction seulement dudit premier ou second couple $C_1$, $C_2$ sélectionné.

Etape a)

Plus précisément, au cours de l'étape a), le calculateur 100 mesure et détermine plusieurs paramètres de fonctionnement du véhicule automobile 1.

Il mesure en particulier, via ses interfaces d'entrée ;

- la vitesse angulaire $\omega_1$ du vilebrequin 11, c'est-à-dire le régime-moteur,
- la vitesse angulaire $\omega_2$ de l'arbre d'entrée 31 de ta boîte de vitesses 30,
- la vitesse $V_{veh}$ du véhicule,
- le taux d'enfoncement de la pédale de frein $TX_{frein}$,
- le taux d'enfoncement de la pédale d'accélérateur $Tx_{acc}$,

- le rapport de vitesses α engagé par la boîte de vitesses 30.

Le calculateur 100 détermine en outre un effort de résistance $F_{res}$ qui correspond sensiblement à la somme des efforts aérodynamiques et de frottement qui freinent le véhicule lorsque celùt-ci se déplace sur une surface plane. Cet effort de résistance présente une valeur qui ne dépend donc pas de la pente p éventuelle de la côte sur laquelle se trouve le véhicule,

Cet effort de résistance $F_{res}$ est déterminé en fonction de la vitesse $V_{veb}$ du véhicule,: grâce à un registre de base de données établi sur banc d'essais et mémorisé dans la mémoire morte. Ce registre comporte à cet effet une pluralité d'enregistrements associés à une pluralité d'intervalles de vitesses du véhicule, et qui comportent chacun une valeur d'effort de résistance $F_{res}$.

Le calculateur 100 détermine par ailleurs la valeur de la vitesse angulaire cible $\omega_{cib}$, qui correspond à la vitesse angulaire à laquelle l'arbre d'entrée 31 de la boîte de vitesses 30 doit théoriquement tourner pour que, compte tenu du rapport de vitesses α engagé, le véhicule avance à la vitesse souhaitée.

En pratique, la vitesse angulaire cible $\omega_{cib}$ est à l'aide d'un modèle mathématique d'accélération du véhicule. Elle est plus précisément calculée de telle manière que le véhicule accélère suivant un modèle préalablement choisi et mémorisé dans la mémoire morte du calculateur 100.

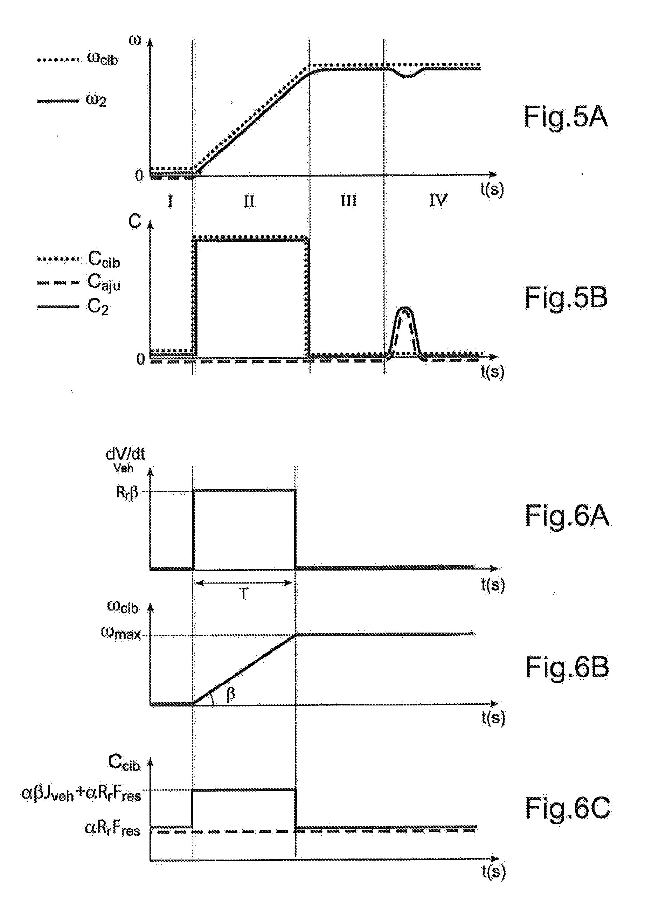

Un exemple d'un tel modèle mathématique est ici représenté sur les figures 6A et 6B.

Tel que représenté sur ces figures, ce modèle est conçu pour que, lorsque la vitesse $V_{veh}$ du véhicule est inférieure à la vitesse maximum de rampage $V_{max}$ et que les pédales d'accélération et de frein sont relâché le véhicule accélère suivant un échelon d'accélération, c'est-à-dire avec une accélération $dV_{veh}/dt$ constante jusqu'à ce que le véhicule atteigne la vitesses maximum de rampage $V_{max}$,

Autrement formulé, lorsque le véhicule est initialement à l'arrêt, t'embrayage 20 est théoriquement piloté de telle manière que la vitesse angulaire de l'arbre d'entrée 31 de la boîte de vitesses 30 augmente continûment selon une fonction affina de coefficient directeur β et durant une durée T, jusqu'à atteindre une vitesse angulaire maximum $\omega_{max}$.

Ce modèle mathématique est donc ici caractérisé par les deux valeurs caractéristiques que sont la durée T et le coefficient directeur β.

Comme te montre la figure 6C, ce modèle mathématique permet ainsi de déterminer la vitesse angulaire cible $\omega_{cib}$ à l'aide des formules mathématiques suivantes :

- si $V_{veh} < V_{max}$, $\omega_{cib} = \beta \cdot t / R_r$ ; et
- si $V_{veh} = V_{max}$, $\omega_{cib} = \omega_{max}$ ;

avec $t = T \cdot V_{veh} / V_{max}$.

Etape b)

Au cours de l'étape b), le calculateur calcule tes premier et second couples $C_1$ et $C_2$.

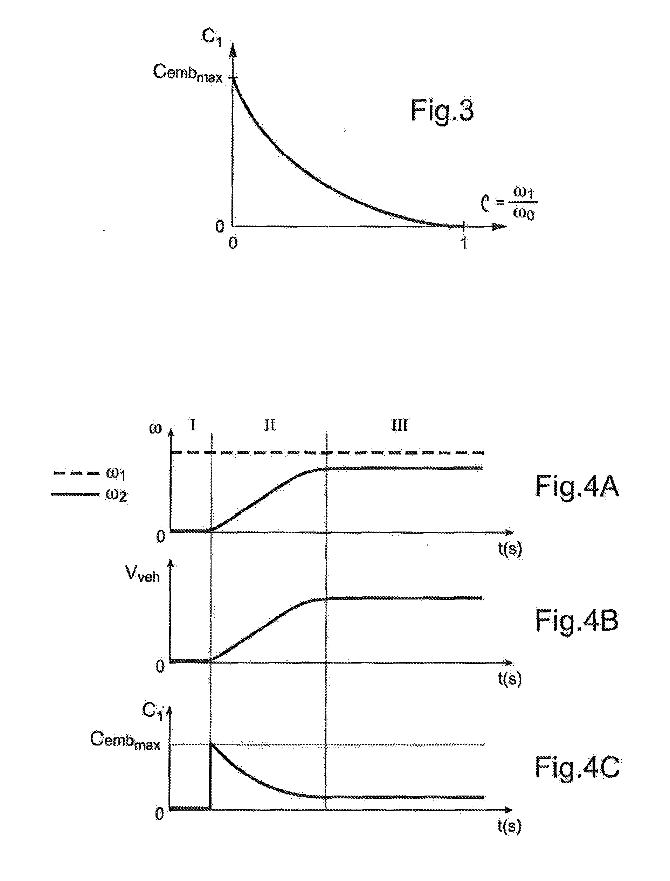

Le premier couple $C_1$ est directement déduit du rapport $\rho = \omega_2 / \omega_1$. au moyen d'uns fonction prédéterminée $f_1$, mémorisée dans la mémoire morte et dont la courbe représentative est illustrée sur la figure 3,

Comme le contre cette figure, le premier couple $C_1$ varie entre 0 lorsque le rapport ρ est egal à 1 (embrayage en position embrayée) et une valeur maximum $Cemb_{max}$ lorsque le rapport p est nul (embrayage en position débrayée).

A titre d'exemple non limitatif la fonction prédéterminée fi peut s'exprimer sous la forme :

$$C_1 = f_1(\rho) = Cemb_{max} \cdot \left[ e^{\rho \cdot \ln\left(\frac{1}{Cemb_{max}} + 1\right)} - 1 \right]$$

Le premier couple $C_1$ est donc calculé indépendamment dos perturbations extérieures subies par le véhicule..

Sur les figures 4A à 4C, on a représenté l'évolution de différents paramètres du véhicule lorsque l'embrayage 20 est piloté suivant ce premier couple $C_1$, au cours de trois phases de rampage, dont une phase I de démarrage, une phase II de transition (eu « phase d'entrée en mode rampage ») et une phase III de stabilisation.

La figure 4A illustre plus particulièrement l'évolution de la vitesse angulaire $\omega_2$ de l'arbre d'entrée 31 de là boîte de vitesses 30 (en trait continu).On remarque sur cette figure qu'en rampage, le régime-moteur $\omega_1$ reste constant, La figure 4B illustre quant à elle l'evolution de la vitesse $V_{veh}$ du véhicule, qui est proportionnelle à la vitesse angulaire $\omega_2$ de l'arbre d'entrée 31. La figure 4C illustre l'évolution du premier couple $C_1$.

Comme le montrent ces figures, lorsqu'aucune perturbation ne vient parasiter le calcul du premier couple. $C_1$ lors des trois phases I, II et III représentées, le couple le transmis par l'embrayage est initialement très important (et égal à la valeur $Cemb_{max}$), afin de mettre en mouvement le véhicule de façon suffisamment dynamique. Puis, lorsque

la vitesse $V_{veh}$ du véhicule augmente, le premier couple $C_1$ diminue progressivement jusqu'à être seulement égal au couple nécessaire pour maintenir la vitesse du véhicule constante si aucune perturbation extérieure ne se fait ressentir.

Le second couple $C_2$ est quant à lui calculé différemment, pour contrer les variations de vitesses du véhicule dues aux perturbations extérieures subies par le véhicule (variation de la pente p de la route sur laquelle roule le véhicule, vent, ...).

Comme le montre la figure 2, ce second couple $C_2$ est calculé comme étant égal à la somme d'un couple cible $C_{cib}$ et d'un couple d'ajustement $C_{aju}$.

Le couple cible $C_{cib}$ est le couple que l'embrayage 20 doit théoriquement transmettre à l'arbre d'entrée 31 de la boîte de vitesses 30 pour faire avancer le véhicule à la vitesse souhaitée.

Le couple d'ajustement $C_{aju}$ permet quant à lui de corriger le couple cible $C_{cib}$ pour tenir compte des perturbations extérieures subies par le véhicule et des erreurs et approximations faites dans le calcul du couple cible $C_{cib}$.

En pratique, le couple cible $C_{cib}$ est calculé à l'aide du modèle mathématique d'accélération du véhicule précité et représenté sur les figures 6A et 6B.

Comme le montre la figure 6C, ce modèle mathématique permet de déterminer le couple cible $C_{cib}$ à l'aide des formules mathématiques suivantes :

- si $V_{veh} < V_{max}$, $C_{cib} = \alpha, \beta . J_{veh} + \alpha . R_r . F_{res}$ ; et
- si $V_{veh} = V_{max}$, $C_{cib} = \alpha . R_r . F_{res}$ ;

avec $J_{veh} = M . R_r^2$.

Ainsi, lorsque la vitesse $V_{veh}$ du véhicule est égale à la vitesse maximum de rampage $V_{max}$, le couple cible $C_{cib}$ est calculé pour que l'embrayage 20 transmette aux roues avant 3 du véhicule 1 un couple permettant de contrer l'effort de résistance $F_{res}$. En revanche, si la vitesse $V_{veh}$ du véhicule est inférieure à la vitesse maximum de rampage $V_{max}$, le couple cible $C_{cib}$ est calculé pour que l'embrayage 20 transmette aux roues avant 3 du véhicule 1 un couple permettant non seulement de contrer les efforts de résistance $F_{res}$, mais aussi de faire accélérer le véhicule 1 suivant l'échelon d'accélération prédéterminé.

Le couple d'ajustement $C_{aju}$ est quant à lui calculé en fonction de l'écart $\varepsilon$ entre la vitesse angulaire cible $\omega_{cib}$ et la vitesse angulaire $\omega_2$ réelle de l'arbre d'entrée 31 de la boîte de vitesses 30. Ainsi, lorsque la Vitesse angulaire $\omega_2$ réelle s'écarte de la vitesse angulaire cible $\omega_{cib}$, le couple d'ajustement $G_{aju}$ permet de corriger le couple cible $C_{cib}$ de manière que la vitesse angulaire $\omega_2$ tende à nouveau vers la vitesse angulaire cible $\omega_{cib}$.

Le couple d'ajustement $C_{aju}$ est plus précisément déduit dudit écart $\varepsilon$ au moyen d'un régulateur proportionnel-intégrale-dérivée (« régulateur PID ») dont les coefficients a, b et c sont mémorisés dans la mémoire morte du calculateur.

Un exemple de calcul du couple d'ajustement $C_{aju}$ est alors le suivant;

$$C_{aju} = a\varepsilon + \frac{1}{b}\int_0^T \varepsilon \, dt + c\frac{d\varepsilon}{dt}$$

avec a, b et c constat.

Le second couple $C_2$ s'exprime alors de la manière suivante :

$$C_2 = C_{cib} + C_{aju}.$$

Sur les figures 5A et 5B, on a représenté l'évolution de différents paramètres du véhicule lorsque l'embrayage 20 est piloté suivant ce second couple $C_2$, au cours de quatre phases de rampage, dont une phase I de démarrage, une phase II de transition (ou « phase d'entrée en mode rampage »), une phase III de stabilisation, et une phase IV de perturbation.

La figure 5A illustre l'évolution de la vitesse angulaire $\omega_2$ (en trait continu) et de la vitesse angulaire cible $\omega_{cib}$ (en pointillés) lors de ces quatre phases. La figure 5B illustre quant à elle l'évolution du second couple $C_2$ (en trait continu), du couple cible $C_{cib}$ (en pointillés) et du couple d'ajustement $C_{aju}$ (en traits discontinus) lors de ces quatre phases.

Comme le montrent ces figures, lorsqu'aucune perturbation ne vient parasiter le calcul de la consigne de pilotage de l'embrayage 20, le régulateur PID n'a aucune influence sur ce calcul et le couple d'ajustement $C_{aju}$ reste nul. La vitesse $V_{veh}$ du véhicule croit donc linéairement jusqu'à atteindre la vitesse maximum dé rampage $V_{max}$.

Puis, lorsqu'une perturbation extérieure engendre une diminution de la vitesse. $V_{veh}$ du véhicule et donc de la vitesse angulaire mesurée $\omega_{mes}$, le régulateur PID intervient et corrige le couple cible $C_{cib}$ à l'aide du couple d'ajustement

$C_{aju}$, ce qui permet de faire revenir la vitesse $V_{veh}$ du véhicule à la vitesse maximum de rampage $V_{max}$.

En résumé, le calcul du second couple $C_2$ est réalisé en boucle fermée, de manière que le pilotage de l'embrayage 20 s'adapte automatiquement aux variations de vitesses du véhicule provenant des perturbations subies par ce véhicule.

Etape c)

Au cours de l'étape c), le calculateur 100 détermine un couple de consigne $C_0$ afin d'en déduire la consigne de pilotage de l'embrayage 20. Ce couple de consigne $C_0$ est déterminé en sélectionnant l'un ou l'autre des premier et second couples $C_1$, $C_2$.

Ici, le couple sélectionné est le plus faible des deux, de manière à s'assurer que le couple de consigne $C_0$ ne prenne jamais une valeur trop importante risquant de dégrader prématurément les disques de l'embrayage 20.

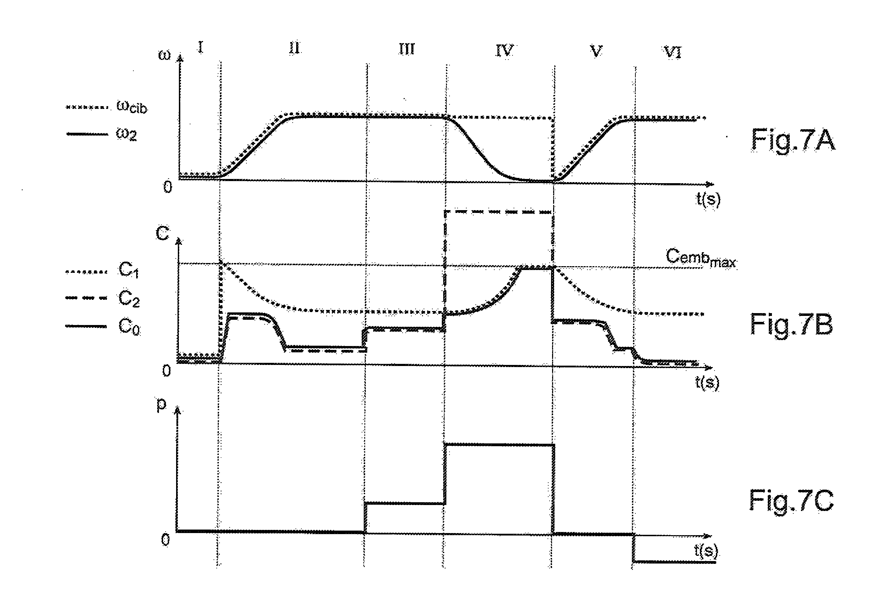

Sur les figures 7A à 7C, on a représenté l'évolution de différents paramètres du véhicule lorsque l'embrayage 20 est piloté suivant le couple de consigne $C_0$ au cours de six phases de rampage, dont une phase I de démarrage, une phase II de transition (ou « phase d'entrée en mode rampage ») et de stabilisation, une phase III de montée d'une côte de faible pente p, une phase IV de montée d'une côte de forte pente p, une phase V de retour sur le plat, et une phase VI de descente d'une côte de faible pente p.

La pente p de la côte est plus précisément représentée sur la figure 7C.

La figure 7A illustre l'évolution de la vitesse angulaire $\omega_2$ (en trait continu) et de la vitesse angulaire cible $\omega_{cib}$ (en pointillés) lors de ces six phases. La figure 7B illustre quant à elle l'évolution des premier et second couples $C_1$, $C_2$ (respectivement en pointillés et en traits discontinus), et l'évolution du couple de consigne $C_0$ (en trait continu) lors de ces six phases.

Comme le montrent ces figures, tant que la pente p est nulle ou réduite, le second couple $C_2$ reste inférieur au premier couple $C_1$, si bien qu'il est sélectionné par le calculateur. L'embrayage 20 est alors piloté suivant ce second couple $C_2$, en fonction des perturbations extérieures subies par le véhicule, de telle sorte que la vitesse du véhicule reste constamment égale à la vitesse désirée.

En revanche, lorsque la pente p est importante, le second couple $C_2$ dépasse le premier couple $C_1$, si bien que ce dernier est sélectionné par le calculateur. L'embrayage 20 est alors piloté suivant ce premier couple $C_1$, indépendamment des perturbations extérieures subies par le véhicule, au bénéfice de la durée de vie des disques de l'embrayage 20.

En variante, on pourra prévoir de sélectionner l'un ou l'autre des premier et second couples autrement.

On pourra par exemple prévoir de sélectionner le second couple $C_2$ tant que celui-ci reste inférieur à un seuil prédétermine (par exemple égal à la valeur $Cemb_{max}$), et de sélectionner sinon le premier couple $C_1$.

Selon un autre exemple, on pourra prévoir d'estimer à l'étape a) la pente p de la montée ou de la descente de la route sur laquelle se trouve le véhicule, puis de sélectionner le second couple $C_2$ tant que cette pente reste inférieure à un seuil prédéterminé (par exemple égal à 10%), et de sélectionner sinon le premier couple $C_1$.

Etape d)

Au cours de l'étape d), la force de pression appliquée sur les disques de l'embrayage 20 est pilotée de manière à ce que ceux-ci transmettent à l'arbre d'entrés 31 de la boîte de vitesses 30 un couple. égal au couple de consigne $C_0$.

La présente invention n'est nullement limitée aux modes de réalisation décrits et représentés, mais l'homme du métier saura y apporter toute variante conforme à son esprit.

En particulier, la vitesse angulaire $\omega_2$ pourra être mesurée sur un arbre autre que l'arbre d'entrée 31 de la boîte de vitesses 30, pour autant que la vitesse angulaire ainsi mesurée soit proportionnelle à la vitesse $V_{vsh}$ du véhicule automobile 1. Elle pourra par exemple être mesurée sur l'arbre de sortie 32 de cette boîte de vitesses 30 ou encore sur l'un des arbres de transmission latéraux avant 41 ou arrière 5 du vélicule.

Selon une autre variante, on pourra prévoir que le rapport p considéré pour calculer le premier couple $C_1$ soit égal, non pas à $\omega_2/\omega_1$ mais plutôt à $\omega_{cib}/\omega_1$.

L'invention s'applique également à un véhicule automobile, équipé d'une boîte de vitesses à double embrayages, en pilotant chacun des deux embrayages suivant un procédé homologue de celui décrit ci-devant.

**Revendications**

1. Procédé de pilotage en mode rampage d'un embrayage (20) d'un véhicule automibile (1) à boîte de vitesses (30) automatique, comportant les étapes consistant à :

a) acquérir des paramètres de fonctionnement ($\omega_1$, $\omega_2$, $\omega_{cib}$, $\beta$, T) du véhicule automobile (1),

b) calculer un couple ($C_1$, $C_2$) en fonction d'une partie au moins desdits paramètres de fonctionnement ($\omega_1$, $\omega_2$, $\omega_{cib}$, $\beta$, T) acquis,

c) déduire une consigne de pilotage ($C_0$) de l'embrayage (20) en fonction dudit couple ($C_1$, $C_2$) calculé,

d) piloter l'embrayage (20) suivant ladite consigne de pilotage ($C_0$),

**caractérisé en ce que** :

- à l'étape a), on mesure une première vitesse angulaire ($\omega_1$) sur un premier arbre (11) lié en rotation à un arbre d'entrée dudit embrayage (20) et une seconde vitesse angulaire ($\omega_2$) sur un second arbre (31) lié en rotation à un arbre de sortie dudit embrayage (20), et on calcule une vitesse angulaire cible ($\omega_{cib}$) pour ledit second arbre (31) en fonction d'une partie au moins desdits paramètres de fonctionnement ($\omega_1$, $\omega_2$, $\omega_{cib}$, $\beta$, T) acquis,

- à l'étape b), on calcule un premier couple ($C_1$) en fonction d'un rapport (p) entre la vitesse angulaire seconde ou cible ($\omega_2$, $\omega_{cib}$) du second arbre (31) et la première vitesse angulaire ($\omega_1$) du premier arbre (11), et on calcule un second couple ($C_2$) en fonction d'un écart ($\varepsilon$) entre la vitesse angulaire cible ($\omega_{cib}$) et la seconde vitesse angulaire ($\omega_2$), et

- à l'étape c), on sélectionne l'un des premier et second Couples ($C_1$, $C_2$) en fonction d'un paramètre de fonctionnement ($\omega_1$, $\omega_2$, $\omega_{cib}$, $\beta$, T) acquis à l'étape a) ou de la valeur de l'un des couples ($C_1$, $C_2$) calculés à l'étape b), et on déduit ladite consigne de pilotage ($C_0$) en fonction seulement dudit premier ou second couple ($C_1$, $C_2$) sélectionné.

2. Procédé de pilotage selon la revendication précédente, dans lequel, à l'étape c), le premier ou second couple ($C_1$, $C_2$) est sélectionné en fonction au moins de la valeur du second couple ($C_2$).

3. Procédé de pilotage selon la revendication précédente, dans lequel, à l'étape c), le premier ou second couple ($C_1$, $C_2$) est sélectionné en fonction de la différence entre le premier couple ($C_1$) et le second couple ($C_2$).

4. Procédé de pilotage selon la revendication précédente, dans lequel, à l'étape c), le premier ou second couple ($C_1$, $C_2$) sélectionné est le plus faible des premier et second couples ($C_1$, $C_2$).

5. Procédé de pilotage selon l'une des revendications précédentes, dans lequel ladite vitesse angulaire cible ($\omega_{cib}$) est calculée en fonction d'un modèle d'accélération ($\beta$,T) prédéterminé du véhicule automobile (1) en mode rampage.

6. Procédé de pilotage selon la revendication précédente, dans lequel le modèle d'accélération présente un échelon d'accélération d'amplitude ($\beta$) et de durée (T) prédéterminées, et dans lequel ladite vitesse angulaire cible ($\omega_{cib}$) est calculée en fonction du produit de ladite amplitude ($\beta$) par ladite durée (T).

7. Procédé de pilotage selon l'une des revendications précédentes, dans lequel à l'étape b), le second couple ($C_2$) est calculé pour être égal à la somme :

- d'un couple cible ($C_{cib}$) calculé en fonction d'une partie au moins desdits paramètres de fonctionnement ($\omega_1$, $\omega_2$, $\omega_{cib}$, $\beta$, T) acquis à l'étape a), et

- d'un couple d'ajustement ($C_{aju}$) calculé en fonction dudit écart ($\varepsilon$).

8. Procédé de pilotage selon la revendication précédente, dans lequel ledit couple d'ajustement ($C_{aju}$) est calculé en fonction dudit écart ($\varepsilon$) au moyen d'un régulateur PID.

9. Procédé de piratage selon l'une des deux revendications précédentes, dans lequel à l'étape b), ledit couple cible ($C_{cib}$) est calculé en fonction d'un modèle d'accélération ($\beta$, T) prédéterminé du véhicule Automobile. (1) en mode rampage.

10. Procédé de pilotage selon la revendication précédente, dans lequel le modèle d'accélération présente un échelon d'accélération d'amplitude ($\beta$) et de durée (T) prédéterminées, et dans lequel ledit couple cible. ($C_{cib}$ est calculé en fonction de ladite amplitude ($\beta$),

11. Véhicule automobile (1) comportant un moteur (10), un embrayage (20), une boîte de vitesses (30) automatique et un calculateur (100) apte à piloter ledit embrayage (20) pour faire varier le couple, transmis depuis le moteur (10) vers la boîte de Vitesses (30), **caractérisé en ce que** le calculateur (100) est programmé pour mettre en oeuvre un procédé de pilotage dudit embrayage (20) selon l'une des revendications précédentes.

# Fig.1

# Fig.2

Fig.3

Fig.4A

Fig.4B

Fig.4C

Fig.5A

Fig.5B

Fig.6A

Fig.6B

Fig.6C

Fig.7A

Fig.7B

Fig.7C

Europäisches
Patentamt

European
Patent Office

Office européen
des brevets

# RAPPORT DE RECHERCHE EUROPEENNE

Numéro de la demande

EP 10 30 6124

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 1 342 607 A2 (HITACHI LTD [JP]) 10 septembre 2003 (2003-09-10) * alinéas [0038], [0040]; figure 1 * ----- | 1,11 | INV. F16D48/08 |
| A | EP 1 605 179 A1 (NISSAN MOTOR [JP]) 14 décembre 2005 (2005-12-14) * revendications; figures 2,3 * ----- | 1,11 | |
| A | DE 10 2007 056884 A1 (LUK LAMELLEN & KUPPLUNGSBAU [DE]) 26 juin 2008 (2008-06-26) * figure 2 * ----- | 1,11 | |

| | | | DOMAINES TECHNIQUES RECHERCHES (IPC) |
|---|---|---|---|
| | | | F16D |

Le présent rapport a été établi pour toutes les revendications

| Lieu de la recherche | Date d'achèvement de la recherche | Examinateur |
|---|---|---|
| Munich | 24 février 2011 | Foulger, Matthew |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 30 6124

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-02-2011

| Document brevet cité<br>au rapport de recherche | | Date de<br>publication | Membre(s) de la<br>famille de brevet(s) | | Date de<br>publication |
|---|---|---|---|---|---|
| EP 1342607 | A2 | 10-09-2003 | JP<br>JP<br>US | 4034089 B2<br>2003262240 A<br>2003171186 A1 | 16-01-2008<br>19-09-2003<br>11-09-2003 |
| EP 1605179 | A1 | 14-12-2005 | JP<br>JP<br>US | 4131253 B2<br>2005351357 A<br>2005277515 A1 | 13-08-2008<br>22-12-2005<br>15-12-2005 |
| DE 102007056884 | A1 | 26-06-2008 | AUCUN | | |

EPO FORM P0460

Pour tout renseignement concernant cette annexe : voir Journal Officiel de l'Office européen des brevets, No.12/82